(19) Europäisches Patentamt
European Patent Office
Office européen des brevets

(11) **EP 2 686 541 B1**

(12) **EUROPÄISCHE PATENTSCHRIFT**

(45) Veröffentlichungstag und Bekanntmachung des Hinweises auf die Patenterteilung:
**27.05.2020 Patentblatt 2020/22**

(21) Anmeldenummer: **12709297.1**

(22) Anmeldetag: **15.02.2012**

(51) Int Cl.:
**B60R 16/03** (2006.01)     **F02N 11/08** (2006.01)

(86) Internationale Anmeldenummer:
**PCT/EP2012/052581**

(87) Internationale Veröffentlichungsnummer:
**WO 2012/123204 (20.09.2012 Gazette 2012/38)**

(54) **STARTSTROMBEGRENZUNGSSYSTEM, VERFAHREN ZUM BEGRENZEN EINES STARTSTROMS SOWIE VERWENDUNG EINES STARTSTROMBEGRENZUNGSSYSTEMS**

START-CURRENT LIMITING SYSTEM, METHOD FOR LIMITING A START CURRENT AND USE OF A START-CURRENT LIMITING SYSTEM

SYSTÈME DE LIMITATION DU COURANT DE DÉMARRAGE, PROCÉDÉ DE LIMITATION DU COURANT DE DÉMARRAGE ET UTILISATION D'UN SYSTÈME DE LIMITATION DU COURANT DE DÉMARRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2011 DE 102011014023**

(43) Veröffentlichungstag der Anmeldung:
**22.01.2014 Patentblatt 2014/04**

(60) Teilanmeldung:
**13184968.9 / 2 690 282**

(73) Patentinhaber: **Auto-Kabel Management GmbH 79688 Hausen i.W. (DE)**

(72) Erfinder: **GRONWALD, Frank 50181 Bedburg (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
**WO-A1-2012/048969     DE-A1- 19 503 809
DE-A1-102008 043 546     DE-A1-102009 047 635**

EP 2 686 541 B1

**Beschreibung**

Der Gegenstand betrifft ein Startstrombegrenzungssystem sowie ein Verfahren zum Betreiben eines solchen Startstrombegrenzungssystems als auch die Verwendung eines Startstrombegrenzungssystems.

Im Rahmen der Diskussion um Einsparpotentiale beim Kraftstoffverbrauch von Kraftfahrzeugen wird häufig die Start/-Stop-Automatik erwähnt. Bei dieser wird der Verbrennungsmotor des Fahrzeugs automatisch während länger anhaltender Leerlaufphasen abgeschaltet. Möchte der Nutzer weiterfahren, so betätigt er lediglich das Gaspedal und der Motor startet automatisch wieder.

Bei einem solchen Warmstart genannten Vorgang muss der Elektro-Startermotor des Verbrennungsmotors, kurz Starter oder Anlasser genannt, mit einer sehr hohen Leistung angetrieben werden. Wenn in einem Fahrzeug nur eine einzige Batterie, z.B. eine Blei-Säure-Batterie oder eine Lithium-Ionen Batterie, verbaut ist, kommt es durch den hohen Leistungsbedarf des Starters zu einem Spannungseinbruch an den Batteriepolen. Dieser Spannungseinbruch kann dazu führen, dass Komfortverbraucher nicht mehr mit genügend Leistung versorgt werden und fehlerhaft arbeiten.

Der Starter wird im Warmstart mit stehendem Anker aktiviert. Das der Starter in der Regel ein Reihenschlussmotor ist, kommt es zu einem Kurzschluss über die Ankerwicklung. Dies führt zu einem sehr hohen Startstrom, der mehrere 100 A betragen kann. Jedoch bricht in diesem Moment in der Regel die Batteriespannung an den Batteriepolen ein. Dies wird z.B. auch in der DIN 40839 beschrieben, die den Spannungsverlauf der Bordnetzspannung in einer Anlasskurve zeigt.

Um zu verhindern, dass es zu Funktionseinbußen bei dem Komfortverbrauchern, wie zum Beispiel Navigationssystemen, Autoradios, Telekommunikationssystemen, Klimaanlagen und dergleichen kommt, ist im Stand der Technik bereits vorgeschlagen, den Startstrom für einen Warmstart zu begrenzen. Insbesondere wird bereits vorgeschlagen, die Komfortverbraucher über eine sogenannte Stützbatterie zu betreiben. Diese Technologie ist beispielsweise aus der DE 10 2007 062 955 A1 bekannt. Hierbei ist es jedoch notwendig, sowohl die Stützbatterie als auch die Hauptbatterie anzusteuern. Die Stützbatterie vergrößert außerdem das Gewicht des Gesamtfahrzeugs.

DE102009047635 offenbart ein Startstrombegrenzungssystem mit einer Parallelschaltung umfassend einen elektrischen Widerstand und einen Schalter. Zu Beginn eines Starts wird ein Starterstrom über den Widerstand geleitet und nach dem Beginn des Starts wird der Starterstrom über den Schalter geleitet.

Aus diesem Grunde lag dem Gegenstand die Aufgabe zugrunde, eine Startstrombegrenzung zur Verfügung zu stellen, die mit geringem baulichem Aufwand ein Höchstmaß an Komfort zur Verfügung stellt.

Diese Aufgabe wird durch ein Startstrombegrenzungssystem nach Anspruch 1 sowie ein Verfahren nach Anspruch 12 und eine Verwendung nach Anspruch 14 gelöst.

Es ist erkannt worden, dass der Einsatz lediglich einer Stromstärke-Steuerungseinrichtung nicht ausreicht. Vielmehr kann es bei dem Einsatz lediglich einer Stromstärke-Steuerungseinrichtung, die vorzugsweise Halbleiterschalter aufweist, im Warmstartfall zu einem sogenannten "durchlegieren" der Halbleiterschalter kommen. Dies liegt daran, dass im Warmstartfall, wenn der Starterstrom vollständig über die Halbleiterschalter fließt, diese überlastet werden können. Gerade bei Starterströmen von über 500 A können herkömmliche Halbleiterschalter "durchlegieren". Um dies zu verhindern, wäre der Einsatz eines sehr teuren Leistungshalbleiterschalters notwendig, der aus Kostengründen vermieden werden soll.

Um nun eine Startstrombegrenzung zu ermöglichen, die gleichzeitig mit wenigen Bauelementen auskommt und den Einsatz von Stromstärke-Steuerungseinrichtungen ermöglicht, wird vorgeschlagen, dass ein erster Anschluss zum Anschluss an einem Kraftfahrzeugbatteriepol gebildet ist.

Ein zweiter Anschluss ist zum Anschluss an einen Starter, insbesondere einen Starter-Elektromotor des Kraftfahrzeugs anschließbar gebildet.

Der Startstrom wird nun somit begrenzt, dass zwischen dem ersten Anschluss und dem zweiten Anschluss eine Parallelschaltung aus einem Zweig mit einer Stromstärke-Steuerungseinrichtung und einem Zweig mit einem elektrischen Widerstand angeordnet ist. Mit Hilfe dieser Parallelschaltung ist es möglich, zu Beginn des Warmstartes den Starterstrom über den Widerstand zu leiten. Hierbei wird vorzugsweise der Startstrom ausschließlich über den Widerstand geleitet. Der Widerstand dient als Strombegrenzer. Da, wie eingangs bereits erläutert, im Startfall die Ankerwicklung kurzgeschlossen ist, würde ohne Widerstand ein Kurzschluss der Batteriepole erfolgen und ein Zusammenbruch der Batteriespannung wäre die Folge. Nach Beginn des Warmstarts, also wenn die Ankerwicklung begonnen hat, sich zu drehen, wird der Starterstrom zusätzlich über die Stromstärke-Steuerungseinrichtung geleitet, d.h. nach einer kurzen Anlaufphase kann die Stromstärke-Steuerungseinrichtung, die zu Beginn geöffnet war, zumindest zeitweise geschlossen werden.

Mit Hilfe der Stromstärke-Steuerungseinrichtung ist es möglich, den Startstrom zu regeln und zu regulieren. Da die Stromstärke-Steuerungseinrichtung erst nach Beginn des Startvorgangs zugeschaltet wird, kann ein Durchlegieren verhindert werden, da die Stromspitzen, die zu Beginn des Startvorgangs erreicht werden, im anschließenden Startvorgang nicht mehr erreicht werden.

Der Widerstand ist vorzugsweise ein niederohmiger Widerstand, der ausreichend dimensioniert ist, um den Startstrom vorzugsweise auf weniger als 1000 A, bevorzugt weniger als 800 A, besonders bevorzugt auf weniger als 500A zu begrenzen.

Die Höhe des Startstroms hängt in der Regel vom Innenwiderstand der Ankerwicklung und der Erregerwicklung und der Höhe des Widerstands ab.

Gemäß einem vorteilhaften Ausführungsbeispiel wird vorgeschlagen, dass die Stromstärke-Steuerungseinrichtung zu Beginn des Warmstarts geöffnet ist und/oder dass die Stromstärke-Steuerungseinrichtung zu Beginn eines Kaltstarts zumindest teilzeitig geschlossen ist. Die Stromstärke-Steuerungseinrichtung sollte zumindest zu Beginn eines Warmstarts geöffnet sein, so dass der Strom von der Batterie zum Starter ausschließlich über den Widerstand fließt. Hierdurch wird verhindert, dass der Startstrom zu groß wird und Komfortverbraucher in ihrer Funktion beeinträchtigt werden. Da der Startstrom durch den Widerstand begrenzt ist, kommt es nicht zu einem Spannungseinbruch an den Batteriepolen und die Komfortverbraucher können weiterhin ihre benötigte Leistung beziehen.

Andererseits kann im Fall eines Kaltstarts, also wenn noch keine Komfortverbraucher eingeschaltet sind, der Startstrom auch über die Stromstärke-Steuerungseinrichtung fließen. Da parallel zu der Stromstärke-Steuerungseinrichtung der Widerstand geschaltet ist, kommt es auch hier nicht zu einer Beschädigung der Stromstärke-Steuerungseinrichtung, wie z.B. einem Durchlegieren der Halbleiter, da ein Teil des Startstroms über den Widerstand fließt und somit die Stromtragfähigkeit der Stromstärke-Steuerungseinrichtung nicht über Gebühr belastet wird.

Ein Warmstart wird häufig bei der Start-Stopp-Technologie zum Einsatz kommen. Ein Warmstart ist ein Start, der dann durchgeführt wird, wenn kurz zuvor der Motor lief. Insbesondere kann ein Warmstart dann vorliegen, wenn seit dem Ausschalten des Motors weniger als 10 Minuten insbesondere weniger als 5 Minuten, vorzugsweise weniger als 1 Minute vergangen ist.

Ein Kaltstart hingegen ist ein solcher Start des Motors, bei dem dieser zuvor nicht im Betrieb war. Insbesondere bei Zeiträumen über 15 Minuten seit dem letzten Betrieb des Motors kann von einem Kaltstart gesprochen werden.

Gemäß einem vorteilhaften Ausführungsbeispiel wird vorgeschlagen, dass die Stromstärke-Steuerungseinrichtung nach Beginn des Warmstarts, insbesondere nach Ablauf von zumindest 10ms, vorzugsweise zumindest 30ms, besonders bevorzugt zumindest 40ms, zumindest teilzeitig geschlossen ist. Im Fall des Warmstarts ist ein hoher Ankerstrom zu erwarten. Sobald der Starter in Bewegung gebracht wurde, d.h. unmittelbar nach dem Beginn des Startvorgangs, ist die zu erwartende Stromspitze überwunden. Dann kann die Stromstärke-Steuerungseinrichtung zugeschaltet werden, also geschlossen werden. Somit fließt Strom sowohl über den Widerstand als auch über die Stromstärke-Steuerungseinrichtung, da diese beiden parallel geschaltet sind.

Das Zuschalten der Stromstärke-Steuerungseinrichtung kann spätestens nach 50ms erfolgen. Nach Ablauf einer sehr kurzen Zeit besteht sowohl keine Gefahr mehr für die Halbleiter in der Stromstärke-Steuerungseinrichtung als auch für die Funktionstüchtigkeit der Komfortverbraucher.

Unter dem Begriff "zumindest teilzeitiges Schließen" kann verstanden werden, dass die Stromstärke-Steuerungseinrichtung nicht dauerhaft geschlossen ist. Insbesondere, wie nachfolgend noch beschrieben werden wird, kann die Stromstärke-Steuerungseinrichtung pulsweitenmoduliert (PWM) betrieben werden. In diesem Fall wird der Stromkreis gepulst geschlossen und geöffnet. Anhand der Pulsweiten lässt sich die über die Stromstärke-Steuerungseinrichtung übertragene Energie begrenzen.

Gemäß der Erfindung wird vorgeschlagen, dass die Stromstärke-Steuerungseinrichtung zumindest einen Halbleiter, vorzugsweise einen Leistungshalbleiter aufweist. Für die Stromstärke-Steuerungseinrichtung kommen ein oder mehrere Halbleiterschalter, insbesondere Transistoren oder Thyristoren in Frage. Die Halbleiterschalter können parallel zueinander geschaltet sein.

Es ist möglich, dass die Stromstärke-Steuerungseinrichtung nach Beginn des Warmstarts in einem Linearbetrieb betrieben wird. In diesem Betrieb wird linear der Strom durch den Halbleiter eingestellt. Auch ist es möglich, dass ein gepulster Betrieb der Stromstärke-Steuerungseinrichtung nach Beginn des Warmstarts vorgesehen ist. Beim gepulsten Betrieb wird die Stromstärke-Steuerungseinrichtung für unterschiedliche Pulsweiten geöffnet und geschlossen. Anhand der Pulsweiten lässt sich die über die Stromstärke-Steuerungseinrichtung übertragene Energie einstellen.

Gemäß einem vorteilhaften Ausführungsbeispiel wird vorgeschlagen, dass der Zweig mit dem Widerstand ausschließlich passive Bauelemente aufweist. Hierdurch soll zum Ausdruck gebracht werden, dass auf eine aktive Steuerung im Zweig des Widerstands verzichtet werden kann. Dies führt zu erheblich verringerten Kosten für die Herstellung und den Betrieb des Startstrombegrenzungssystems. Außerdem kann ein Widerstand mit einer sehr hohen Stromtragfähigkeit ausgestattet sein und kann somit auch für hohe Startströme eingesetzt werden. Schließlich ist ein Widerstand im Dauerbetrieb einsetzbar und Verschleißerscheinungen treten so gut wie nicht auf.

Vorzugsweise ist der Widerstand aus einem Widerstandsmaterial. Insbesondere wenn über den Widerstand, wie nachfolgend gezeigt werden wird, eine Spannungsmessung erfolgen soll, kann das Widerstandsmaterial beispielsweise aus Manganin gebildet sein. Der Widerstand ist als Shunt gebildet. Auch kann der Widerstand als elektrisches Kabel gebildet sein, welches elektrisch parallel zu der Stromstärke-Steuerungseinrichtung geschaltet sein kann. Je nach Wahl des Kabelquerschnitts als auch der Kabellänge kann der Widerstand eingestellt werden. Durch die Einstellung des Widerstands kann der Strom, der im Startfall fließt, begrenzt werden.

Gemäß einem vorteilhaften Ausführungsbeispiel wird vorgeschlagen, dass der Zweig mit dem Widerstand parallel zu der Stromstärke-Steuerungseinrichtung mit einer Induktivität von weniger als 500 mH, vorzugsweise weniger als 100 mH, besonders bevorzugt weniger als 50 mH geschaltet ist. Die Anordnung des Zweigs mit dem Widerstand parallel zu der Stromstärke-Steuerungseinrichtung, insbesondere deren räumliche Anordnung zueinander ist entscheidend für die Induktivität der Parallelschaltung. Dadurch, dass die Stromstärke-Steuerungseinrichtung auch in einem gepulsten Betrieb betrieben werden kann, entstehen Schwingungsvorgänge in der Parallelschaltung zwischen Widerstand und Stromstärke-Steuerungseinrichtung. Diese Schwingungsvorgänge sind umso größer, je höher die Induktivität der Stromschleife der Parallelschaltung ist.

Aus diesem Grunde wird vorgeschlagen, den Widerstand möglichst induktivitätsarm mit der Stromstärke-Steuerungseinrichtung zu verschalten, d.h. dass der aus Widerstand und Stromstärke-Steuerungseinrichtung gebildete Schwingkreis eine möglichst geringe Induktivität haben sollte. Während des gepulsten Betriebs entstehen Spannungen U in dem Schwingkreis in der

Größe $U = -L\dfrac{\partial I}{\partial t}$, wobei L die Induktivität des Schaltkreises darstellt und I den Strom durch die Parallelschaltung. Im gepulsten Betrieb treten hohe Stromschwankungen innerhalb kürzester Zeit auf, so dass sehr hohe Spannungen auftreten können. Um diese so gering wie möglich zu halten, muss die Induktivität L der Schaltung gering sein.

Gemäß einem vorteilhaften Ausführungsbeispiel wird vorgeschlagen, dass der Widerstand eine Stromtragfähigkeit von mehr als 100 A, bevorzugt mehr als 250 A, bevorzugt mehr als 500 A aufweist. Dadurch, dass der Widerstand für eine hohe Stromtragfähigkeit ausgelegt ist, kann ein sehr hoher Strom zu Beginn des Warmstartvorgangs über den Widerstand fließen, ohne dass der Widerstand zerstört wird. Dadurch, dass der hohe Strom über den Widerstand fließt, während die Stromstärke-Steuerungseinrichtung zunächst ausgeschaltet und geöffnet ist, wird verhindert, dass die Stromstärke-Steuerungseinrichtung Schaden nimmt. Nach einer Weile, d.h. wenn der Starter angelaufen ist, kann die Stromstärke-Steuerungseinrichtung zugeschaltet werden, da die Stromspitze überschritten ist und nur noch geringere Ströme fließen.

Gemäß einem vorteilhaften Ausführungsbeispiel, was für sich genommen bereits erfinderisch ist, wird vorgeschlagen, dass in Reihe zu der Parallelschaltung ein aktives Trennelement, vorzugsweise ein pyrotechnisches Trennelement oder einen Halbleiterschalter zwischen den Anschlüssen oder zwischen dem ersten Anschluss und dem Kraftfahrzeugbatteriepol angeordnet ist. Anders als eine Schmelzsicherung, die passiv ist, kann ein aktives Trennelement durch ein äußeres Auslösesignal aktiviert werden. Insbesondere ein pyrotechnisches Trennelement oder ein Leistungshalbleiter eignen sich hierzu besonders, da dieses sehr schnell und sehr sicher auslöst. Mit Hilfe des Trennelementes ist es möglich, im Crashfall die Starter-Batterie-Leitung von der Batterie zu trennen, so dass Funkenbildungen im Bereich dieser Leitung unterbunden werden können.

Wie bereits zuvor erläutert und gemäß einem vorteilhaften Ausführungsbeispiel beansprucht, kann das Trennelement abhängig von einem Auslösesignal die elektrische Verbindung mit dem Batteriepol trennen. Hierdurch wird gewährleistet, dass das Auslösesignal eine Trennung der Starter-Batterie-Leitung von dem Batteriepol ermöglicht. Dies führt zu einer höheren Sicherheit, insbesondere im Crashfall.

Gemäß einem vorteilhaften Ausführungsbeispiel wird vorgeschlagen, dass das Auslösesignal von einem Airbagsteuergerät empfangbar ist. Ein Airbagsteuergerät kann im Crashfall ein Auslösesignal ausgeben, welches zum Aktivieren des Trennelements, insbesondere zum Zünden des pyrotechnischen Trennelements führen kann.

Auch ist es möglich, dass eine bedarfsgerechte Trennung ausschließlich im Kurzschlussfall im Bereich der Starter-Batterie-Leitung erfolgt. Dies ist z.B. dann möglich, wenn das Auslösesignal abhängig von einer die Spannung über den Widerstand messenden Spannungsmesseinrichtung ausgegeben wird. Der Widerstand ist ein Shunt. Ist der Widerstand ein Shunt, kann die Spannung über den Widerstand sehr genau gemessen werden. Da über den Widerstand lediglich der Strom fließt, der von der Batterie zum Starter fließt, kann ein Kurzschluss im Bereich des Starterkabels über diesen Widerstand detektiert werden, da dann der Strom über den Widerstand hoch ist und der Spannungsabfall dementsprechend ebenfalls hoch ist. Überschreitet die Spannung einen Grenzwert, so kann auf einen Kurzschluss geschlossen werden. Gemäß einem vorteilhaften Ausführungsbeispiel kann das Auslösesignal auch zusätzlich abhängig von einem Startsignal, vorzugsweise ein Klemme 50 Signal sein. Im Startfall, insbesondere im Warmstartfall aber auch im Kaltstartfall, fließen über den Widerstand insbesondere im Augenblick des Startens sehr hohe Ströme. Diese führen zu einem hohen Spannungsabfall, der in der Regel den Grenzwert überschreitet, der dazu führen würde, dass das Auslösesignal ausgegeben würde. Im Falle eines Vorliegens eines Startsignals darf dieser hohe Strom jedoch erreicht werden. Daher ist es möglich, dass Vorliegen des Startsignals in einer NAND-Verknüpfung mit dem Grenzwert der Spannung zu verknüpfen. D.h., wenn das Startsignal vorliegt, wird auf keinen Fall ein Auslösesignal ausgelöst, selbst wenn der Spannungsgrenzwert überschritten ist. Anderenfalls, wenn das Startsignal nicht vorliegt, wird das Auslösesignal ausgelöst, sobald die Spannung den Grenzwert überschreitet.

Gemäß einem vorteilhaften Ausführungsbeispiel wird vorgeschlagen, dass die Anschlüsse, der Widerstand und die Stromstärke-Steuereinrichtung und vorzugsweise die Trenneinrichtung zumindest teilweise in einem gemeinsamen Gehäuse gekapselt sind. Die Anschlüsse können außerhalb des Gehäuses beginnen und den Strompfad in das Gehäuse hineinführen. Die Trenneinrichtung kann ebenfalls in dem Gehäuse angeordnet sein. Auch ist es möglich, dass die Trenneinrichtung an einem der Anschlüsse angeordnet ist und zumindest teilweise außerhalb des Gehäuses ist. Die Stromstärke-Steuereinrichtung, die in der Regel über Halbleiterbauteile verfügt, ist regelmäßig in dem Gehäuse gekapselt.

Eine Bauraumoptimierung im Fahrzeug wird dann erreicht, wenn das Gehäuse an oder in einer Polnische an der Kraftfahrzeugbatterie angeordnet ist. Insbesondere kann das Gehäuse bzw. der Anschluss in unmittelbarer Verbindung mit einer Batteriepolklemme sein, so dass das Startstrombegrenzungssystem unmittelbar an der Batterie angeordnet sein kann.

Gemäß einem vorteilhaften Ausführungsbeispiel wird vorgeschlagen, dass zumindest einer der Anschlüsse einen Vorsprung, vorzugsweise ein Topf oder Napf hat, derart, dass der Vorsprung zu einer Aufnahme eines pyrotechnischen Trennelements korrespondiert. In diesem Fall kann der Anschluss unmittelbar Teil des pyrotechnischen Trennelements sein. Der Anschluss kann so geformt sein, dass sich dieser relativ zum pyrotechnischen Trennelement bewegen, insbesondere gebogen werden kann. Hierdurch ist es möglich, den Anschluss aus dem pyrotechnischen Trennelement bzw. der Aufnahme des pyrotechnischen Trennelements herauszusprengen, wobei der Anschluss sich dann verbiegt und der Strompfad getrennt wird.

Gemäß einem vorteilhaften Ausführungsbeispiel wird vorgeschlagen, dass die Aufnahme des pyrotechnischen Trennelements einstückig mit einer Batteriepolklemme gebildet ist. Dies ermöglicht eine besonders kostengünstige und platzsparende Montage, da unmittelbar an der Batteriepolklemme die Aufnahme des pyrotechnischen Trennelements angeordnet sein kann. In der Aufnahme des pyrotechnischen Trennelements kann eine Zündpille angeordnet sein und anschließend kann der Vorsprung des Anschluss in die Aufnahme gepresst werden. Hierdurch wird eine besonders sichere Trennung beim möglichst geringem Materialaufwand ermöglicht.

Gemäß einem vorteilhaften Ausführungsbeispiel wird vorgeschlagen, dass die beiden Anschlüsse in parallel zueinander angeordneten, über einen Spalt elektrisch voneinander isolierten Flachteilen, insbesondere Blechen oder Bändern, münden. Somit ist es möglich, dass beide Anschlüsse an Blechen angeordnet oder aus Blechen gebildet sind. Ein Blech eines Anschlusses kann beispielsweise rechtwinklig verbogen sein und ein Schenkel kann den Vorsprung, der mit der Aufnahme des pyrotechnischen Trennelements korrespondiert, aufweisen.

Vorzugsweise ist der Spalt zwischen den beiden Flachteilen mit einem Isolator gefüllt. Hierdurch werden die Flachteile voneinander isoliert. Der Widerstand kann den Spalt elektrisch überbrücken, so dass dieser eine elektrische Verbindung zwischen den Flachteilen und somit auch zwischen den Anschlüssen herstellt. Parallel dazu kann die Stromstärke-Steuerungseinrichtung ebenfalls die Flachteile überbrücken. Die Flachteile eignen sich insbesondere für den Anschluss der Stromstärke-Steuerungseinrichtung, da hierauf insbesondere Halbleiterschalter besonders leicht montiert und befestigt werden können. Insbesondere können mehrere Halbleiterschalter parallel zueinander über den Spalt die beiden Anschlüsse miteinander kontaktieren.

Ein weiterer Gegenstand ist ein Verfahren nach Anspruch.

Hierbei wird vorgeschlagen, dass zunächst die Stromstärke-Steuerungseinrichtung zu Beginn eines Warmstartvorgangs eine Verbindung zwischen dem Kraftfahrzeugbatteriepol und dem Starter öffnet. Insbesondere sind die Halbleiterschalter in der Stromstärke-Steuerungseinrichtung geöffnet, so dass kein Strom über sie fließen kann. Jedoch wird vorgeschlagen, dass die Anschlüsse über einen Widerstand elektrisch miteinander verbunden sind. Dieser Widerstand ist permanent zwischen den Anschlüssen angeordnet, so dass zu Beginn eines Warmstartvorgangs der Strom ausschließlich über den Widerstand fließen kann. Nach einer Weile, insbesondere nach 30 bis 50 ms, ist der Starter angelaufen und die Stromspitzen sind überschritten, so dass die Stromstärke-Steuerungseinrichtung zugeschaltet werden kann. Dann fließt der Strom parallel über den Widerstand und die Schalter der Stromstärke-Steuerungseinrichtung.

Durch das gezeigte Verfahren ist es möglich, in besonders einfacher Weise eine Stromstärke-Steuerungseinrichtung vor Überströmen zu schützen und gleichzeitig den Komfort, insbesondere die Energieversorgung von Komfortverbrauchern, auch im Warmstartfall zu gewährleisten.

Nachfolgend wird der Gegenstand anhand einer Ausführungsbeispiele zeigenden Zeichnung näher erläutert. In der Zeichnung zeigen:

Fig. 1      ein elektrisches Ersatzschaltbild einer Startstrombegrenzungsvorrichtung gemäß einem Ausführungsbeispiel;

Fig. 2      eine schematische Ansicht einer Startstrombegrenzungsvorrichtung mit einer Trennvorrichtung;

Fig. 3      eine weitere schematische Ansicht einer Startstrombegrenzungsvorrichtung mit einer Trenneinrichtung;

Fig. 4      eine Explosionszeichnung einer Startstrom-

Fig. 5    eine Startstrombegrenzungsvorrichtung im zusammengebauten Zustand;

Fig. 6    eine Detailansicht einer Trennvorrichtung;

Fig. 7a    eine Ansicht von zwei Anschlussteilen während des Fertigungsprozesses nach einem Ausführungsbeispiel;

Fig. 7b    Anschlussteile bestückt mit einer StromstärkeSteuerungseinrichtung und einem Widerstand nach einem Ausführungsbeispiel;

Fig. 8a    eine Ansicht von zwei Anschlussteilen während des Fertigungsprozesses nach einem Ausführungsbeispiel;

Fig. 8b    Anschlussteile bestückt mit einer StromstärkeSteuerungseinrichtung und einem Widerstand nach einem Ausführungsbeispiel;

Fig. 8c    eine weitere mögliche Anordnung eines Widerstands an den Anschlussteilen nach einem Ausführungsbeispiel;

Fig. 9a    eine zusätzliche Möglichkeit des Anschlusses des Widerstands an den Anschlussteilen nach einem Ausführungsbeispiel;

Fig. 9b    eine zusätzliche Möglichkeit des Anschlusses des Widerstands an den Anschlussteilen nach einem Ausführungsbeispiel;

Fig. 10    eine Ansicht von Anschlussteilen mit Widerstand, Startstrom-Steuerungseinrichtung und Auswertungseinrichtung;

Fig. 11    eine schematische Schnittansicht durch die Anschlussteile und den Widerstand gemäß Fig. 7a zur Darstellung der Stromrichtungen und der BFeldlinien;

Fig. 12    eine schematische Schnittansicht durch die Anschlussteile und den Widerstand gemäß Fig. 8a zur Darstellung der Stromrichtungen und der BFeldlinien.

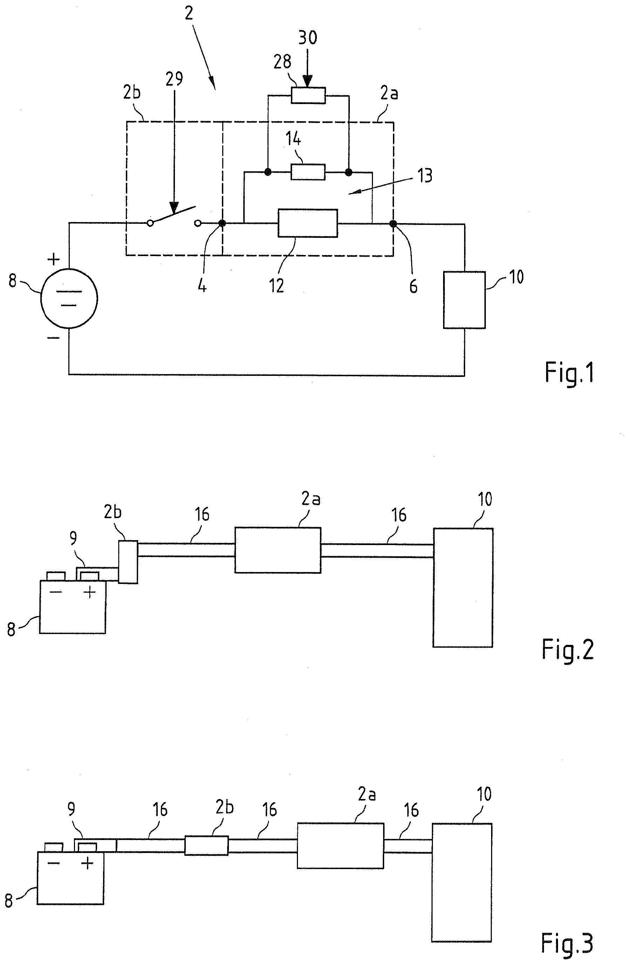

Fig. 1 zeigt ein elektrisches Ersatzschaltbild eines Startstromsbegrenzungssystems 2 mit einer Startstrombegrenzungsvorrichtung 2a und einer Trennvorrichtung 2b. Ferner ist gezeigt, dass die Startstrombegrenzungsvorrichtung 2a einen ersten Anschlusskontakt 4 sowie einen zweiten Anschlusskontakt 6 aufweist. Der erste Anschlusskontakt 4 ist einer elektrischen Batterie 8 zugeordnet. Der zweite Anschlusskontakt 6 ist einem Elektro-Startermotor 10 zugeordnet.

Somit zeigt die Fig. 1 einen elektrischen Starterstromkreis. Der Starterstrom fließt ist Startfall von der Kraftfahrzeugbatterie 8, insbesondere vom Pluspol der Batterie 8 über das Startstrombegrenzungssystem 2 zu dem Starter 10.

Der Starter 10 benötigt im Startfall, sowohl beim Warmstart als auch beim Kaltstart, eine hohe elektrische Leistung. Dies führt dazu, dass der Strom im gezeigten Schaltkreis von der Batterie 8 zum Starter 10 sehr hoch ist. Insbesondere im Warmstartfall, also wenn Komfortverbraucher bereits eingeschaltet sind, muss verhindert werden, dass die Spannung an den Batteriepolen der Batterie 8 zusammenbricht. Dies könnte dazu führen, dass Komfortverbraucher Funktionseinbußen erleiden. Um diesen Spannungseinbruch zu verhindern, wird die Startstrombegrenzungsvorrichtung 2a vorgeschlagen.

Die Startstrombegrenzungsvorrichtung 2a ist aus einer Stromstärke-Steuerungseinrichtung 12 und einem Widerstand 14 gebildet.

Die Stromstärke-Steuerungseinrichtung 12 ist vorzugsweise aus einer Parallelschaltung mehrere Halbleiterbauelemente, insbesondere mehrere Halbleiterschalter, insbesondere mehrere als Schalter betriebene Transistoren gebildet.

Der Widerstand 14 ist vorzugweise ein niederohmiger Widerstand, der als Shunt auch zu Messzwecken geeignet ist.

Zwischen den Anschlusskontakten 4 und 6 bildet die Parallelschaltung aus Stromstärke-Steuerungseinrichtung 12 und Widerstand 14 einen Schwingkreis 13. Die in dem Schwingkreis 13 induzierte Spannung ist abhängig zum Einen von der Stromschwankung innerhalb des Schwingkreises 13 als auch der Induktivität L des Schwingkreises 13. Die Spannung U folgt der Gleichung $U = -L \dfrac{\partial I}{\partial t}$, wobei L die Induktivität des Schwingkreises 13 darstellt und di/dt den Gradienten des Stromes.

Insbesondere bei einer gepulsten Stromsteuerung durch die Stromstärke-Steuerungseinrichtung 12 kommt es zu großen Stromschwankungen, die im Schwingkreis 13 hohe Spannungen induzieren, welche vermieden werden müssen. Daher ist die Induktivität des Schwingkreises 13 möglichst gering auszubilden, wie nachfolgend gezeigt werden wird.

Das Startstrombegrenzungssystem 2 verfügt darüber hinaus über die Trennvorrichtung 2b, die vorzugsweise als pyrotechnische Trennvorrichtung gebildet ist. Die Trennvorrichtung kann aber auch als Schmelzsicherung oder als Halbleiterschalter gebildet sein. Die Trennvorrichtung 2b dient dazu, die Batterie 8 vollständig von der Startstrombegrenzungsvorrichtung 2a sowie von dem Starter 10 zu trennen. Die Trennvorrichtung 2b ist vorzugsweise pyrotechnisch oder als Halbleiterschalter gebildet und wird durch ein Auslösesignal 29 gesteuert. Das Auslösesignal 29 kann von einem Airbagsteuergerät stammen. Auch ist es möglich, dass das Auslösesignal abhängig von einer Spannung über den Widerstand 14 ausgelöst wird.

Eine Steuerschaltung 28 kann zum Beispiel den Spannungsabfall über den Widerstand 14 messen. Über einen externen Anschluss 30 kann zum Beispiel überprüft werden, ob ein Startersignal, insbesondere ein Klemme 50 Signal anliegt oder nicht. Nur im Falle des Startsignals darf ein Strom über den Widerstand 14 fließen, da nur dann der Starter 10 mit Strom versorgt werden muss. Ist kein Startsignal an dem Anschluss 30 detektierbar, kann davon ausgegangen werden, dass kein Startvorgang vorliegt. Fließt in diesem Fall ein Strom über den Widerstand 14 und wird somit ein Spannungsabfall mit der Steuerschaltung 28 erfasst, kann ein Auslösesignal 29 an die Trennvorrichtung 2b gegeben werden. Die Trennvorrichtung 2b trennt die elektrische Verbindung zwischen der Batterie 8 und dem Starter 10, so dass kein Strom mehr fließen kann.

Fig. 2 zeigt eine mögliche Anordnung der Trennvorrichtung 2b innerhalb des Starterstromkreises. Fig. 2 zeigt schematisch die Kraftfahrzeugbatterie 8. An dem Pluspol der Kraftfahrzeugbatterie 8 kann eine Batteriepolklemme 9 angeschlossen sein. Unmittelbar an der Batteriepolklemme 9, beispielsweise auch einstückig mit der Batteriepolklemme 9 gebildet, kann die Trennvorrichtung 2b vorgesehen sein.

Hierbei kann die Trennvorrichtung 2b aus einem ersten, pyrotechnischen Teil und einem zweiten, beweglichen Teil gebildet sein, wie nachfolgend noch dargelegt werden wird. Wie zu erkennen, kann die Starterleitung 16, welche die Batterie 8 mit dem Starter 10 verbindet, somit unmittelbar an der Batteriepolklemme 9 durch die Trennvorrichtung 2b getrennt werden. Im Trennungsfall ist somit die gesamte Starterleitung 16 spannungs- und stromlos.

Die Startstrombegrenzungsvorrichtung 2a kann sowohl unmittelbar an der Trennvorrichtung 2b als auch der Batteriepolklemme 9 als auch irgendwo sonst in der Starterleitung 16 angeordnet sein, wie dies in Fig. 3 dargestellt ist.

Fig. 3 zeigt eine weitere mögliche Anordnung der Trennvorrichtung 2b in der Starterleitung 16. Zu erkennen ist, dass die Trennvorrichtung 2b nicht unmittelbar an der Batteriepolklemme 9, sondern in der Starterleitung 16 zwischen Batteriepolklemme 9 und Startstrombegrenzungsvorrichtung 2a angeordnet ist. Dann wird im Trennungsfall lediglich die Starterleitung 16 zwischen der Trennvorrichtung 2b und dem Starter 10 strom- und spannungslos. Die Starterleitung 16 im Bereich zwischen der Batteriepolklemme 9 und der Trennvorrichtung 2b bleibt mit der Batterie kontaktiert. Solange dieser Bereich in einem unkritischen Bereich des Fahrzeugs liegt, ist dies unproblematisch.

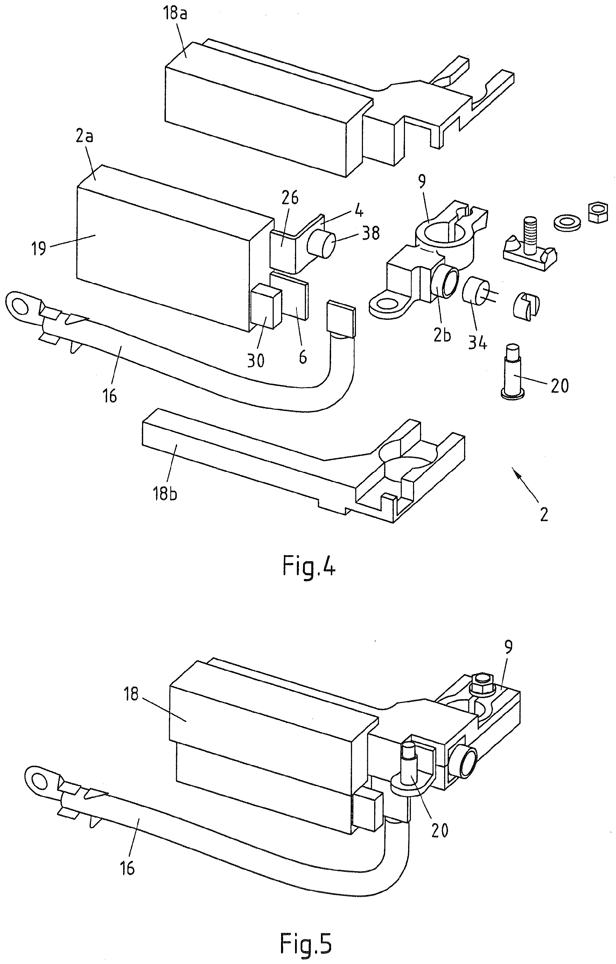

Fig. 4 zeigt eine Explosionsdarstellung einer möglichen Ausgestaltung eines Startstrombegrenzungssystems 2 mit einer Startstrombegrenzungsvorrichtung 2a und einer Trennvorrichtung 2b. Zu erkennen ist, dass die Trennvorrichtung 2b einstückig mit der Batteriepolklemme 9 gebildet ist. Wie zu erkennen ist, kann die Trennvorrichtung 2b mit einer pyrotechnischen Zündpille 34 bestückt sein. Die Zündpille 34 ist in einem Schusskanal 36 in der Trennvorrichtung 2b angeordnet. Auf der anderen Seite des Schusskanals 36 kann der Anschlusskontakt 4 als Topf oder Napf 38 geformt sein und in den Schusskanal 36 eingeführt werden.

Im Falle einer Auslösebedingung wird ein Zündsignal über die Leitung 29 an die Zündpille 34 übermittelt. Die Zündpille 34 explodiert daraufhin und im Schusskanal 36 entsteht ein Überdruck. Durch diesen Überdruck wird die rechtwinklig zum Anschlussteil 26 geformte Lasche des Anschlusskontakts 4 mit dem Topf 38 aus dem Schusskanal gedrückt und verbogen. Hierdurch erfolgt eine elektrische Trennung des Batteriepols 9 von dem Anschlusskontakt 4.

Ferner ist zu erkennen, dass der Anschlusskontakt 4 in einem ersten Anschlussteil 26 mündet. Das erste Anschlussteil 26 ist mit einem zweiten Anschlussteil (hier nicht dargestellt) 24 in einem Gehäuse der Startstrombegrenzungsvorrichtung 2a gekapselt. Ferner ist zu erkennen, dass das zweite Anschlussteil 24 in dem Anschlusskontakt 6. Der Anschlusskontakt 6 ragt genauso wie der Anschluss 30 aus dem Gehäuse 19 heraus. Der Anschlusskontakt 6 dient zur elektrischen Kontaktierung der Starterleitung 16 mit der Startstrombegrenzungsvorrichtung 2a. Die Starterleitung 16 kann an den Anschlusskontakt 6 angeschweißt, angelötet oder auch verschraubt werden.

Das gesamt Startstrombegrenzungssystem 2 kann mit einem Gehäuse 18 verkapselt werden, wie in Fig. 5 dargestellt. Ferner ist in Fig. 5 zu erkennen, dass ein elektrischer Stützpunkt 20 aus dem Gehäuse 18 herausgeführt ist. Der elektrische Stützpunkt 20 dient zum Anschluss des Bordnetzes des Kraftfahrzeugs an die Batteriepolklemme 9 und somit die Batterie 8. Der Stützpunkt 20 ist nicht durch die Trennvorrichtung 2b gegenüber der Batteriepolklemme 9 gesichert, so dass selbst im Auslösefall der Trennvorrichtung 2b der Stützpunkt 20 mit der Batteriepolklemme 9 in elektrischen Kontakt bleibt. D.h., dass bei einem Auslösen der Trennvorrichtung 2b im Falle eines Kurzschlusses auf der Starterleitung 16 der Rest des Fahrzeugs in Kontakt mit der Batterie 8 bleiben kann und hier eine getrennte Sicherung erfolgen kann.

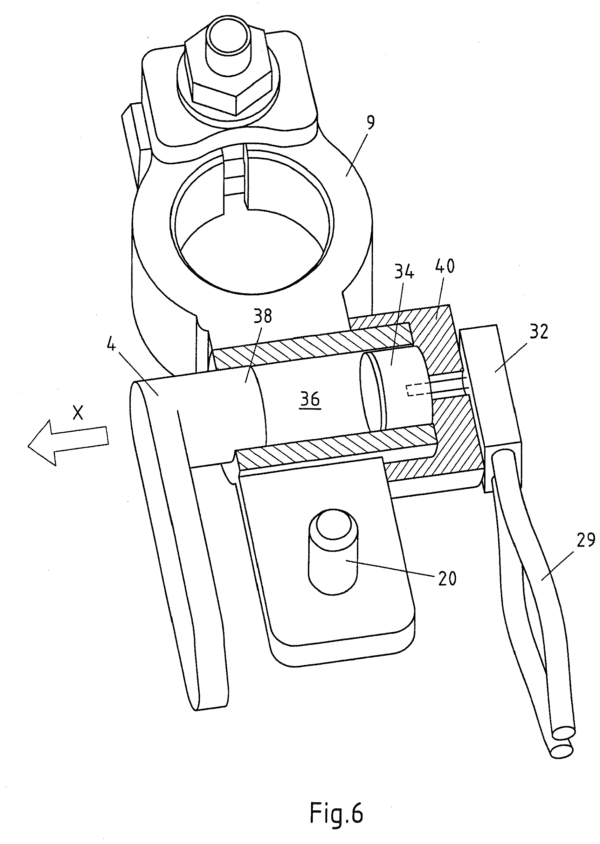

Der Aufbau einer Trennvorrichtung 2b ist detaillierter in der Fig. 6 dargestellt. In der Fig. 6 ist die Batteriepolklemme 9 mit der Trennvorrichtung 2b in teilweise aufgeschnittenen Zustand dargestellt.

Zu erkennen ist, dass die pyrotechnische Zündpille 34 in einem Schusskanal 36 angeordnet ist. Der Schusskanal 36 ist auf der anderen Seite durch den Topf 38 des Anschlusskontakts 4 verschlossen. Vorzugsweise ist der Schusskanal zumindest im Bereich der Zündpille 34 durch ein Gehäuse 40 abgedichtet. Das Gehäuse 40 kann um den Schusskanal 36 herum gegossen sein.

Ferner ist zu erkennen, dass der Stützpunkt 20 aus dem Gehäuse 40 herausgeführt ist und nicht über die Trennvorrichtung 2b gegenüber der Batteriepolklemme 9 gesichert ist.

Schließlich ist zu erkennen, dass über eine elektrische Ansteuerungsleitung 29 eine Zündvorrichtung 32 gezündet werden kann. Die Zündvorrichtung 32 kann entweder über ein Signal eines Airbagsteuergerätes aktiviert werden oder durch ein Signal von der Auswertungsschaltung 28, wie dies oben bereits erläutert wurde.

Im Falle des Zündens der Zündpille wird der Topf 38 des Anschlusses 4 in Richtung X aus dem Schusskanal 36 gepresst. Eine elektrische Verbindung zwischen Batteriepolklemme 9 und Anschluss 6 wird unterbrochen.

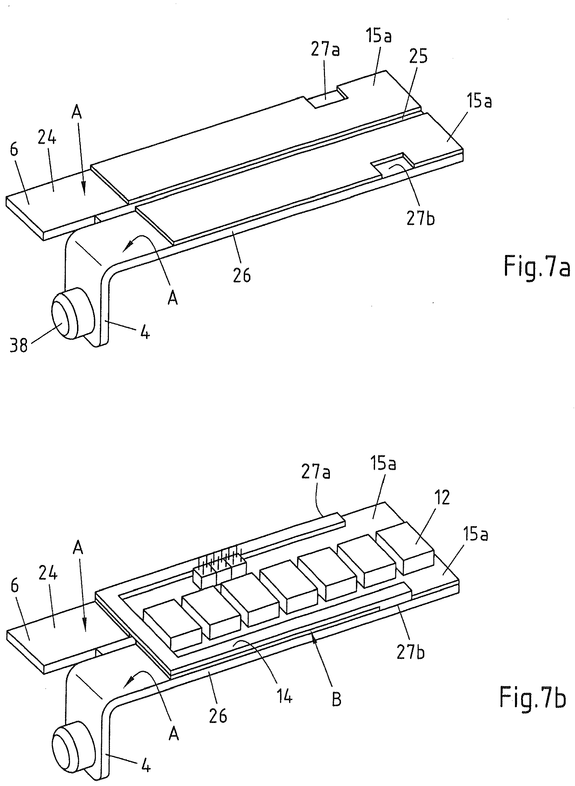

Die Figs. 7 bis 10 zeigen halbfertige Bauteile die während eines Herstellungsverfahrens für eine Startstrombegrenzungsvorrichtung 2a entstehen.

Zunächst werden zwei Flachteile, vorzugsweise Kupferplatten als Stanz-Biegeteile nebeneinander angeordnet, wie in Fig. 7a gezeigt. Zwischen den Flachteilen, die das erste Anschlussteil 26 und das zweite Anschlussteil 24 bilden, kann ein Spalt mit einem Isolator 25 gefüllt sein. Das erste Anschlussteil 26 kann so gebogen sein, dass der Anschlusskontakt 4 winklig, vorzugsweise rechtwinklig zu dem Verlauf des ersten Anschlussteils 26 verläuft. An dem ersten Anschlusskontakt 4 kann im Stanz-Biegeprozess ein Topf 38 angeformt sein.

Der Anschlusskontakt 6 kann an einem Ende des zweiten Anschlussteils 24 geformt sein.

Ferner ist zu erkennen, dass auf der Oberfläche A der Anschlussteile 24, 26, ausgenommen der Anschlusskontakte 4, 6 sowie der Kontaktbereiche 27a, 27b ein Isolator 15a, vorzugsweise in einem Siebdruckverfahren aufgebracht ist. Der Isolator 15a dient der Isolation der Anschlussteile 24, 26 gegenüber dem Widerstand 14.

Die Oberfläche A ist diejenige Oberfläche des Flachteils, die dem Widerstand 14 zugewandt sein wird.

Fig. 7a zeigt das erste Anschlussteil 26, welches an seinem ersten Ende den Anschlusskontakt 4 mit dem Topf 38 aufweist und an seinem zweiten Ende den Kontaktbereich 27b. Ferner zeigt Fig. 7a das zweite Anschlussteil 24, welches an seinem ersten Ende den Anschlusskontakt 6 und an seinem zweiten Ende den Kontaktbereich 27a aufweist.

Vorzugsweise kann mittels eines Siebdruckverfahrens eine Lotpaste auf die Kontaktbereiche 27a, b aufgebracht werden.

Anschließend kann in den Isolator 15a, der auf den Anschlussteilen 24, 26 aufgebracht ist, eine Anschlussmöglichkeit für eine Stromstärke-Steuerungseinrichtung 12 vorgesehen werden. Hierzu können in den Isolator 15a an verschiedenen Stellen Kontaktbereiche gefräst, gebohrt oder geätzt werden.

Anschließend kann zunächst, wie in Fig. 7b gezeigt, der Widerstand 14 auf die Anschlussteile 24, 26, bzw. den Isolator 15a aufgelegt werden. Der Widerstand 14 ist im gezeigten Beispiel U-förmig, und die langen Schenkel des Widerstands 14 verlaufen parallel zu den jeweiligen Anschlussteil 24, 26 und der kurze Schenkel verläuft senkrecht hierzu. Zu erkennen ist ferner, dass der Widerstand 14 auf dem Isolator 15a der Anschlussteile 24, 26 aufliegt. Der Widerstand 14 ist als Flachteil gebildet. Die Schenkel des Widerstands 14 spannen eine Fläche auf, die planparallel zu der Oberfläche A verläuft.

Auch ist zu erkennen, dass der Widerstand 14 auf den Anschlussteilen 24, 26 in den Kontaktbereichen 27a, 27b aufliegt. Mittels eines Lötverfahrens, beispielsweise in einem Reflow-Ofen, kann der Widerstand 14 mit den Kontaktbereichen 27 verlötet werden. Hierdurch entsteht eine elektrische Verbindung zwischen dem Widerstand 14 und den Anschlussteilen 24, 26 im Bereich der Kontaktbereiche 27.

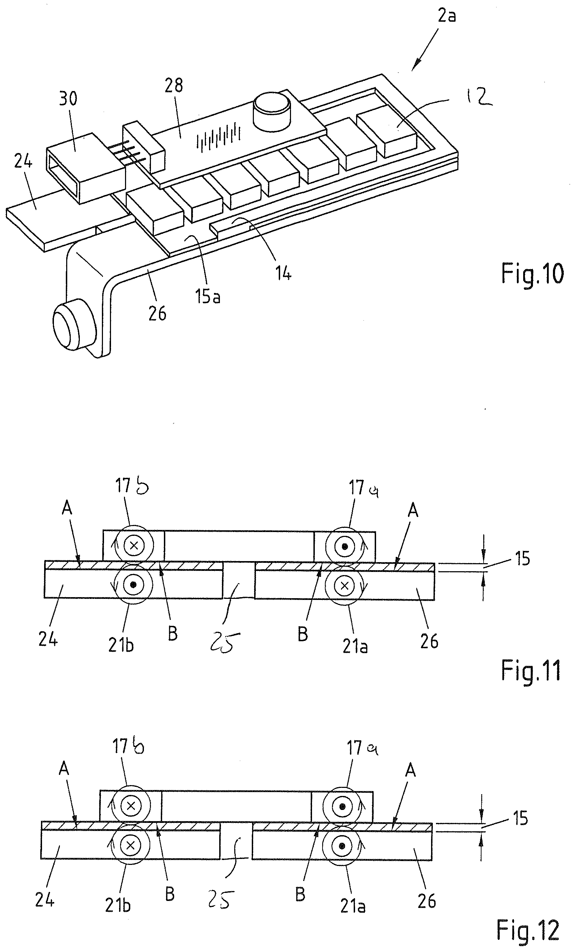

Ein Querschnitt durch den Aufbau aus Anschlussteilen 24, 26 und Widerstand 14 ist in Fig. 11 dargestellt. In Fig. 11 ist zu erkennen, dass der Widerstand 14 getrennt durch einen mit einem Isolator 15a gefüllten Spalt 15 beabstandet von dem Anschlussteilen 24, 26 auf den Anschlussteilen 24, 26 aufliegt. Ferner sind die Stromflussrichtungen in den Anschlussteilen 24, 26 sowie den Widerstand 14 dargestellt.

Zu erkennen ist, dass die Stromflussrichtungen in dem Widerstand 14 und dem jeweiligen Anschlussteil 24, 26 entgegengesetzt ist. Die Stromflussrichtung in dem Anschlussteil 26 ist beispielhaft in die Zeichenebene hinein und in dem Widerstand 14 im Bereich des Anschlussteils 26 aus der Zeichenebene heraus. Genau umgekehrt ist dies im Bereich des Anschlussteils 24, wo die Stromflussrichtung im Bereich des Widerstands 14 in die Zeichenebene hineinzeigt und im Bereich des Anschlussteils 24 aus der Ebene herauszeigt.

Dies liegt daran, dass der Strom, wie in Fig. 7b zu erkennen ist, von dem Anschlusskontakt 4 an einem Ende des Anschlussteils 26 bis zu dem Kontaktbereich 27b an dem anderen Ende des Anschlussteils 26 fließt. Von dem Kontaktbereich 27b fließt dann der Strom über den Widerstand 14 in die entgegengesetzte Richtung zunächst zum kurzen Schenkel und von dort zu dem Kontaktbereich 27a. Vom Kontaktbereich 27a fließt der Strom von dem einen Ende des Anschlussteils 24 zu dem am anderen Ende des Anschlussteils 24 angeordneten Anschlusskontakt 6.

Durch die entgegengesetzten Stromflussrichtungen entstehen im Bereich des Spalts 15 gleichgerichtete B-Felder 17, 21 und im durch den Isolator 25 gefüllten Spalt entgegengesetzte B-Felder 17, 21. Zu erkennen ist, dass das B-Feld 17a durch den Strom im Widerstand 14 links drehend ist, wohingegen das B-Feld 21a rechtsdrehend ist. Das B-Feld 17b durch den Strom im Widerstand 14 ist rechtsdrehend und das B-Feld 21b wiederum linksdrehend. Somit sind die B-Feldlinien der B-Felder 17, 21 im Bereich des Spalts 15 gleichgerichtet, vorzugsweise parallel und im Bereich des Isolators 25 sind die B-Felder 17a, 21b und 17b, 21a entgegengesetzt, vorzugsweise antiparallel.

Da der Strom im Widerstand 14 zeitweise etwas geringer sein kann, als in den Anschlussteilen 24, 26, was daran liegt, dass ein Teil des Stroms über die Stromstärkesteuerungseinrichtung 12 von dem Anschlussteil 26 zu dem Anschlussteil 24 fließen kann, sind die B-Felder nicht immer gleich stark. Jedoch führt der kleine Spalt 15 von vorzugsweise weniger als 1mm trotz der entgegengesetzte Stromflussrichtung in den Widerstand 14 und den Anschlussteilen 24, 26 dazu, dass der Schwingkreis 13 eine geringe Induktivität, vorzugsweise weniger als 500mH hat.

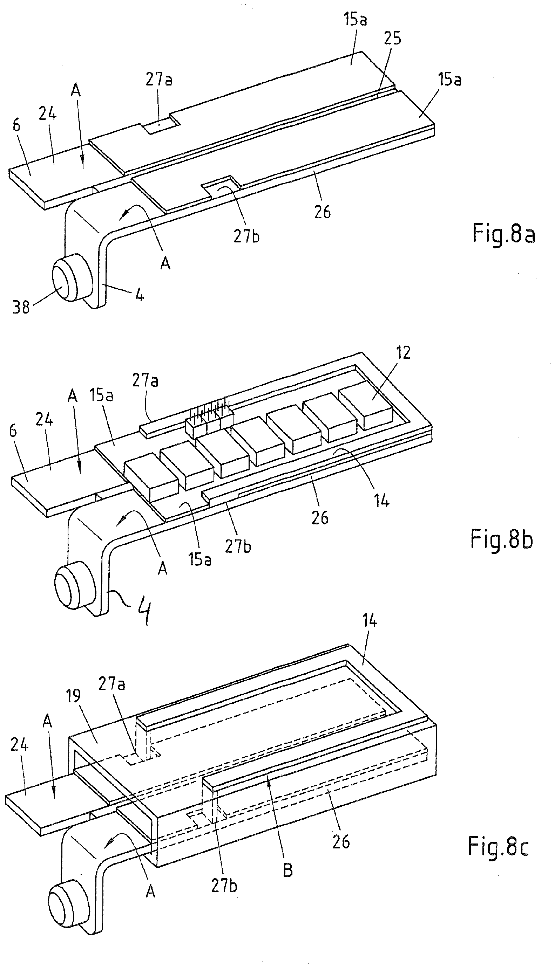

Fig. 8a zeigt das erste Anschlussteil 26, welches an seinem ersten Ende den Anschlusskontakt 4 mit dem Topf 38 aufweist und diesem Ende ebenfalls den Kontaktbereich 27b. Ferner zeigt Fig. 8a das zweite Anschlussteil 24, welches an seinem ersten Ende den Anschlusskontakt 6 und ebenfalls an diesem Ende den Kontaktbereich 27a aufweist.

Ebenfalls ist, wie in Fig. 7a, der Isolator 15a aufgebracht und die Kontaktbereich 27 gebildet.

Wie in Fig. 8b gezeigt, kann der Widerstand 14 auf die Anschlussteile 24, 26, bzw. den Isolator 15a aufgelegt werden. Der Widerstand 14 ist im gezeigten Beispiel U-förmig, und die langen Schenkel des Widerstands 14 verlaufen parallel zu den jeweiligen Anschlussteil 24, 26 und der kurze Schenkel verläuft senkrecht hierzu. Die Öffnung des Widerstands zeigt in Richtung der Anschlusskontakte 4, 6. Dies ist gemäß dem Beispiel in Fig. 7b genau umgekehrt. Dort zeigt die Öffnung des Profils des Widerstands von den Anschlusskontakten 4, 6 weg. Zu erkennen ist in Fig. 7b und 8b, dass das Profil des Widerstands 14 die Stromstärke-Steuerungseinrichtung 12 an drei Seiten umgreift.

Ein Querschnitt durch den Aufbau aus Anschlussteilen 24, 26 und Widerstand 14 gemäß Fig. 8b ist in Fig. 12 dargestellt. In Fig. 12 ist zu erkennen, dass der Widerstand 14 getrennt durch einen mit einem Isolator 15a gefüllten Spalt 15 beabstandet von dem Anschlussteilen 24, 26 auf den Anschlussteilen 24, 26 aufliegt. Wie auch gemäß Fig. 11 weist eine Oberfläche B des Widerstands 14 in Richtung der Oberfläche A der Anschlussteile 24, 26. Die Stromflussrichtungen in den Anschlussteilen 24, 26 sowie den Widerstand 14 sind in Fig. 12 dargestellt.

Zu erkennen ist, dass die Stromflussrichtungen in dem Widerstand 14 und dem jeweiligen Anschlussteil 24, 26 gleichgerichtet sind. Die Stromflussrichtung in dem Anschlussteil 26 ist beispielhaft aus der Zeichenebene heraus und in dem Widerstand 14 im Bereich des Anschlussteils 26 ebenfalls aus der Zeichenebene heraus. Genau umgekehrt ist dies im Bereich des Anschlussteils 24, wo die Stromflussrichtung im Bereich des Widerstands 14 in die Zeichenebene hineinzeigt und im Bereich des Anschlussteils 24 ebenfalls in die Zeichenebene aus der Ebene hinein zeigt.

Dies liegt daran, dass der Strom, wie in Fig. 8b zu erkennen ist, von dem Anschlusskontakt 4 an einem Ende des Anschlussteils 26 zu dem Kontaktbereich 27b an dem gleichen Ende des Anschlussteils 26 fließt. Außerdem fließt der Strom entlang des Anschlussteils 26 in die Stromstärke-Steuerungseinrichtung 12. Von dem Kontaktbereich 27b fließt der Strom auch über den Widerstand 14 in die gleiche Richtung wie im Anschlussteil 26 zunächst zum kurzen Schenkel und von dort zu dem Kontaktbereich 27a. Vom Kontaktbereich 27a fließt der Strom von Widerstand zu dem Anschlusskontakt 6. In dem Anschlussteil 24 fließt der Strom von Stromstärke-Steuerungseinrichtung 12 ebenfalls in Richtung des Anschlusskontakts 6 und somit ebenfalls in die gleiche Richtung.

Durch die gleichgerichteten Stromflussrichtungen entstehen im Bereich des Spalts 15 entgegengesetzte B-Felder 17, 21 und im durch den Isolator 25 gefüllten Spalt gleichgerichtete B-Felder 17, 21. Zu erkennen ist, dass das B-Feld 17a durch den Strom im Widerstand 14 und das B-Feld 21a links drehend sind. Das B-Feld 17b durch den Strom im Widerstand 14 und das B-Feld 21b sind rechtsdrehend. Somit sind die B-Feldlinien der B-Felder 17, 21 im Bereich des Spalts des Isolators 25, vorzugsweise parallel und im Bereich des Spalts 15 sind die B-Felder 17a, 21b und 17b, 21a entgegengesetzt, vorzugsweise antiparallel.

Fig. 8c zeigt einen ähnlichen Aufbau wie Fig. 8b, jedoch ist zu erkennen, dass die Stromstärke-Steuerungseinrichtung 12 mit den Anschlussteilen 24, 26 in dem Gehäuse 19 gekapselt ist und der Widerstand 14, kontaktiert über die Kontaktbereiche 27 außerhalb des Gehäuses 19 angeordnet ist.

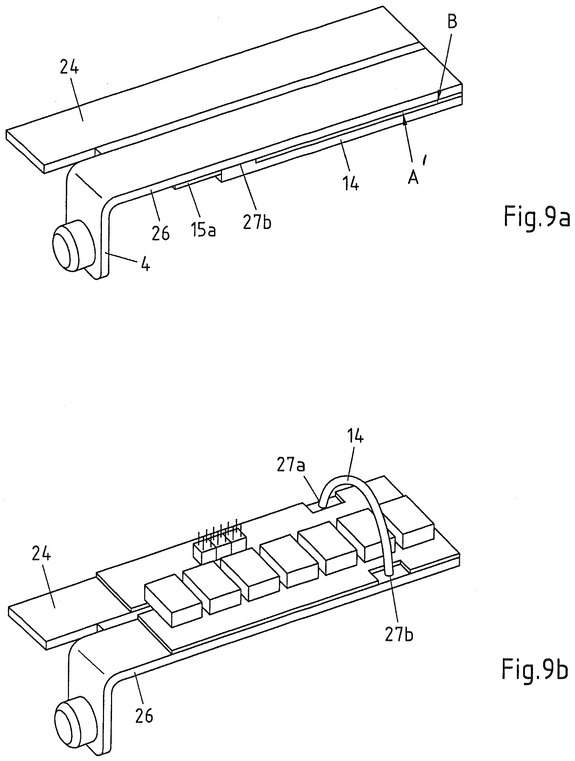

Fig. 9a zeigt einen ähnlichen Aufbau wie in der Fig. 8b, jedoch ist hier der Widerstand 14 auf der der Stromstärke-Steuerungseinrichtung 12 abgewandten Oberfläche A' der Anschlussteile 24, 26 angeordnet.

Fig. 9b zeigt einen ähnlichen Aufbau wie Fig. 8b, wobei der Widerstand 14 hier jedoch nicht durch ein U-förmiges Blech gebildet ist, sondern vielmehr als ein zwischen den Kontaktbereichen 27 angeordnetes Kabel gebildet ist.

Fig. 10 zeigt den Aufbau der Startstrombegrenzungsvorrichtung 2a in einem weiter fortgeschrittenen Stadium. Zu erkennen ist, dass die Steuerungsschaltung 28 oberhalb des Widerstands 14 vorgesehen ist. Die Steuerungsschaltung 28 kann zum Einen zum Auswerten der Spannung über den Widerstand 14 dienen und somit über den Anschluss 30 ein Ansteuersignal 29 zum Ansteuern der Trennvorrichtung 2b generieren.

Darüber hinaus kann über den Anschluss 30 ein Steuersignal in der Steuerungsschaltung 28 empfangen werden, mit dessen Hilfe die Halbleiterschalter in der Stromstärke-Steuerungseinrichtung 12 der Startstrombegrenzungsvorrichtung 2a angesteuert werden können. Insbesondere kann ein gepulster Betrieb der Halbleiterschalter erfolgen. Mit Hilfe eines pulsweitenmodulierten Startstromes ist es möglich, die von der Batterie 8 zum Starter 10 übertragene elektrische Energie zu regulieren, so dass der Startvorgang des Starters 10 gesteuert erfolgen kann.

Andererseits ist es möglich, über die Steuerungsschaltung 28 Stromstärke-Steuerungseinrichtung 12 komplett zu öffnen, so dass insbesondere zu Beginn eines Startvorgangs, vorzugsweise in den ersten 10, 20, 30, 40 oder 50ms der Strom ausschließlich über den Widerstand 14 fließt. Erst anschließend kann ein Schließen der Halbleiterschalter Stromstärke-Steuerungseinrichtung 12 erfolgen, wobei die Halbleiterschalter gepulst, insbesondere in einem pulsweitenmodulierten Verfahren geöffnet und geschlossen werden, so dass der Strom auch teilweise über die Stromstärke-Steuerungseinrichtung 12 fließen kann.

Mit Hilfe der gezeigten Vorrichtung ist es möglich, die Starterleitung sowie den Starter im Crashfall stromlos und spannungslos zu schalten. Ferner ist es möglich, den Startstrom zu begrenzen und gleichzeitig Halbleiter einer Startstrombegrenzungsvorrichtung vor Überströmen zu schützen. Darüber hinaus ist es möglich, die induzierten Spannungen in dem Startstrombegrenzungssystem so gering wie möglich zu halten und schließlich kann eine thermische Symmetrisierung und somit eine gute Wärmeabfuhr realisiert werden.

**Patentansprüche**

1. Startstrombegrenzungssystem mit

    - einem ersten an einen Kraftfahrzeugbatteriepol anschließbaren elektrischen Anschluss (4),
    - einem zweiten an einen Starter anschließbaren elektrischen Anschluss (6), und
    - einer zwischen dem ersten Anschluss (4) und dem zweiten Anschluss (6) geschalteter Parallelschaltung aus einem Zweig mit einer Stromstärke-Steuerungseinrichtung (12) und einem Zweig mit einem elektrischen Widerstand (14), derart, dass zu Beginn eines Warmstarts des Kraftfahrzeugs ein Starterstrom über den Widerstand (14) geleitet wird und dass nach dem Beginn des Warmstarts der Starterstrom über die Stromstärke-Steuerungseinrichtung (12) und den Widerstand (14) geleitet wird, **dadurch gekennzeichnet, dass**
    - dass der Widerstand als Shunt gebildet ist und dass die Stromstärke-Steuerungseinrichtung (12) durch zumindest einen Halbleiterschalter gebildet ist und nach Beginn des Warmstarts den Starterstrom in einem Linearbetrieb, in dem der Starterstrom linear durch der Halbleiterschalter eingestellt wird oder in einem gepulsten Betrieb, in dem die Stromstärke-Steuerungseinrichtung (12) gepulst geschlossen und geöffnet wird, einstellt.

2. Startstrombegrenzungssystem nach Anspruch 1, **dadurch gekennzeichnet, dass** die Stromstärke-Steuerungseinrichtung (12) zu Beginn des Warmstarts geöffnet ist und/oder dass die Stromstärke-Steuerungseinrichtung (12) zu Beginn eines Kaltstarts zumindest teilzeitig geschlossen ist.

3. Startstrombegrenzungssystem nach Anspruch 1 oder 2, **dadurch gekennzeichnet, dass** die Stromstärke-Steuerungseinrichtung (12) nach Beginn des Warmstarts, insbesondere nach Ablauf von zumindest 10ms, vorzugsweise 30ms, besonders bevorzugt 40ms zumindest teilzeitig geschlossen ist.

4. Startstrombegrenzungssystem nach einem der vorangehenden Ansprüche, **dadurch gekennzeichnet, dass** der Zweig mit dem Widerstand (14) ausschließlich passive Bauelemente aufweist und/oder dass der Zweig mit dem Widerstand (14) parallel zu der Stromstärke-Steuerungseinrichtung (12) mit einer Induktivität von weniger als 500mH, vorzugsweise weniger als 100mH, besonders bevorzugt weniger als 50mH geschaltet ist.

5. Startstrombegrenzungssystem nach einem der vorangehenden Ansprüche, **dadurch gekennzeichnet, dass** der Widerstand (14) eine Stromtragfähigkeit von mehr als 100A, bevorzugt mehr als 250A, besonders bevorzugt von mehr als 500A aufweist.

6. Startstrombegrenzungssystem nach einem der vorangehenden Ansprüche, **dadurch gekennzeichnet, dass** in Reihe zu der Parallelschaltung ein pyrotechnisches Trennelement (2b) zwischen den Anschlüssen (4, 6) oder zwischen dem ersten Anschluss (4) und dem Kraftfahrzeugbatteriepol angeordnet ist.

7. Startstrombegrenzungssystem nach Anspruch 6, **dadurch gekennzeichnet, dass** das pyrotechnische Trennelement (2b) abhängig von einem Auslösesignal die elektrische Verbindung mit dem Kraftfahrzeugbatteriepol trennt, insbesondere wobei das Auslösesignal von einem Airbagsteuergerät empfangbar ist oder wobei das Auslösesignal abhängig von einer die Spannung über den Widerstand (14) messenden Spannungsmesseinrichtung ist, insbesondere wobei das Auslösesignal abhängig von einem Startsignal, vorzugsweise einem Klemme 50 Signal, ist.

8. Startstrombegrenzungssystem nach einem der vorangehenden Ansprüche, **dadurch gekennzeichnet, dass** die Anschlüsse (4, 6), der Widerstand (14) und die Stromstärke-Steuerungseinrichtung (12) und, wenn das Startstrombegrenzungssystem von Anspruch 6 oder 7 abhängig ist, das Trennelement zumindest teilweise in einem gemeinsamen Gehäuse gekapselt sind.

9. Startstrombegrenzungssystem nach Anspruch 6 oder 7, **dadurch gekennzeichnet, dass** der zumindest eine Anschluss (4, 6) einen Topf (38) bildet, derart, dass der Topf (38) zu der Aufnahme (36) des pyrotechnischen Trennelements (2b) korrespondiert.

10. Startstrombegrenzungssystem nach Anspruch 6, 7 oder 9, **dadurch gekennzeichnet, dass** die Aufnahme (36) des pyrotechnischen Trennelements (2b) einstückig mit einer Batteriepolklemme (9) gebildet ist.

11. Startstrombegrenzungssystem nach einem der vorangehenden Ansprüche, **dadurch gekennzeichnet, dass** die beiden Anschlüsse (4, 6) in parallel zueinander angeordneten, über einen Spalt elektrisch voneinander isolierten Blechen münden, wobei der Widerstand (14) und/oder die Stromstärke-Steuerungseinrichtung (12) die Bleche über den Spalt elektrisch miteinander kontaktiert.

12. Verfahren zum Betreiben eines Startstrombegrenzungssystem gemäß einem der vorherigen Ansprüche umfassend

- Öffnen einer Verbindung zwischen dem ersten an einen Kraftfahrzeugbatteriepol anschließbaren elektrischen Anschluss (4) und dem zweiten an einen Starter anschließbaren elektrischen Anschluss (6) über die Stromstärke-Steuerungseinrichtung (12) zu Beginn eines Warmstartvorgangs,
- Verbinden der Anschlüsse (4, 6) über den Widerstand (14) zu Beginn des Warmstartvorgangs, und
- zusätzliches zumindest teilzeitiges Verbinden der Anschlüsse (4, 6) nach Beginn des Warmstarts über die Stromstärke-Steuerungseinrichtung (12) wobei der Starterstrom durch die Stromstärke-Steuerungseinrichtung (12), die durch zumindest einen Halbleiterschalter gebildet ist, und nach Beginn des Warmstarts in einem Linearbetrieb, in dem der Starterstrom linear durch der Halbleiterschalter eingestellt wird oder in einem gepulsten Betrieb, in dem der Stromstärke-Steuerungseinrichtung (12) gepulst geschlossen und geöffnet wird, eingestellt wird.

13. Verfahren nach Anspruch 12, **gekennzeichnet durch** Überwachen eines Spannungsabfalls über den Widerstand (14) als zumindest eine erste Auslösebedingung und vorzugsweise zusätzliches Überwachen eines Startsignals als weitere Auslösebedingung.

14. Verwendung eines Startstrombegrenzungssystems nach Anspruch 1 in einer Batterie-Starter Leitung eines Kraftfahrzeugs.

**Claims**

1. Starting current limitation system with

- a first electrical connection (4) connectable to a motor vehicle battery pole,
- a second electrical connection (6) connectable to a starter, and
- a parallel circuit connected between the first connection (4) and the second connection (6), comprising a branch with a current control device (12) and a branch with an electrical resistor (14), in such a way that, at the beginning of a warm start of the motor vehicle, a starter current is conducted via the resistor (14) and that, after the beginning of the warm start, the starter current is conducted via the current control device (12) and the resistor (14),
**characterised in that**
- the resistor (14) is formed as a shunt and that the current control device (12) is formed by at least one semi-conductor switch and after beginning of the warm start sets the starter current in a linear mode wherein the starter current through the semi-conductor switch is set to be linear or in a pulsed mode, wherein the current control device (12) is closed and opened in a pulsed fashion.

2. Starting current limitation system according to Claim 1, **characterised in that** the current control device (12) is opened at the beginning of the warm start and/or that the current control device (12) is at least temporarily closed at the beginning of a cold start.

3. Starting current limitation system according to Claim 1 or 2, **characterised in that** the current control device (12) is at least temporarily closed after the beginning of the warm start, in particular after at least 10 ms, preferably 30 ms, particularly preferably 40 ms.

4. Starting current limitation system according to one of the preceding claims, **characterised in that** the branch with the resistor (14) has entirely passive components and and/or **in that** the branch with the resistor (14) is connected in parallel with the current control device (12) with an inductance of less than 500 mH, preferably less than 100 mH, particularly preferably less than 50 mH.

5. Starting current limitation system according to one of the preceding claims, **characterised in that** the resistor (14) has a current-carrying capacity of more than 100 A, preferably more than 250 A, particularly preferably more than 500 A.

6. Starting current limitation system according to one of the preceding claims, **characterised in that** in series with the parallel circuit a pyrotechnic disconnecting element (b) is disposed between the connections (4, 6) or between the first connection (4) and the motor vehicle battery pole.

7. Starting current limitation system according to claim 6, **characterised in that** the pyrotechnic disconnecting element (2b) disconnects the electrical connection with the motor vehicle battery pole depending on a trigger signal, in particular wherein the trigger signal is receivable from an airbag control device or wherein the trigger signal is dependent on a voltage measurement device measuring the voltage over the resistor (14), in particular wherein the trigger signal is dependent on a start signal, preferably a terminal 50 signal.

8. Starting current limitation system according to one of the preceding claims, **characterised in that** the connections (4, 6), the resistor (14) and the current control device (12) and when the starting current limitation system is according to claim 6 or 7, the disconnecting device are at least partially encapsulated in a common housing.

9. Starting current limitation system according to claim 6 or 7, **characterised in that** the at least one connection (4, 6) forms a pot (38), in such a way that the pot (38) corresponds to the recess (36) of the pyrotechnic disconnecting element (2b).

10. Starting current limitation system according to claim 6, 7 or 9, **characterised in that** the recess (36) of the pyrotechnic disconnecting element (2b) is formed as one piece with a battery pole terminal (9).

11. Starting current limitation system according to one of the preceding claims, **characterised in that** the two connections (4, 6) open out into metal sheets disposed parallel to one another and electrically isolated from one another via a gap, wherein the resistor (14) and/or the current control device (12) electrically contacts the metal sheets with one another via the gap.

12. Method for operating a starting current limitation system according to one of the preceding claims, comprising

- opening of a connection between the first electrical connection (4) connectable to a motor vehicle battery pole and the second electrical connection (6) connectable to a starter via a current control device (12) at the beginning of a warm start process,
- connecting the connections (4, 6) via the resistor (14) at the beginning of the warm start process, and
- additional at least temporary connecting the connections (4, 6) after the beginning of the warm start via the current control device (12), wherein starter current through current control device (12), which is formed by at least one semi-conductor switch (12) is set after beginning of the warm start in a linear mode wherein the starter current through the semi-conductor switch is set to be linear or in a pulsed mode, wherein the current control device (12) is closed and opened in a pulsed fashion.

13. Method according to Claim 12, **characterised by** monitoring a voltage drop via the resistor (14) as at least a first trigger condition and preferably additional monitoring of a start signal as a further trigger condition.

14. Use of a starting current limitation system according to Claim 1 in a battery starter line of a motor vehicle.

**Revendications**

1. Système de limitation du courant de démarrage, ledit système comprenant :

- une première connexion électrique (4) pouvant être raccordée à une borne polaire de la batterie d'un véhicule automobile,
- une seconde connexion électrique (6) pouvant être raccordée à un démarreur, et
- un montage en parallèle couplé entre la première connexion (4) et la seconde connexion (6), ledit montage en parallèle étant réalisé à partir d'une branche ayant un dispositif de commande d'intensité de courant (12) et à partir d'une branche ayant une résistance électrique (14), de manière telle qu'au début d'un démarrage à chaud du véhicule automobile, un courant du démarreur soit dirigé en passant par la résistance (14) et que, après le début du démarrage à chaud, le courant du démarreur soit dirigé en passant par le dispositif de commande d'intensité de courant (12) et par la résistance (14), **caractérisé**
- **en ce que** la résistance est formée comme une dérivation, et en ce que le dispositif de commande d'intensité de courant (12) est formé par au moins un contacteur à semi-conducteurs et, après le début du démarrage à chaud, ledit dispositif de commande règle le courant du démarreur passant dans un fonctionnement en mode linéaire, fonctionnement au cours duquel le courant du démarreur est réglé de façon linéaire par le contacteur à semi-conducteurs, ou bien ledit dispositif de commande règle ledit courant du démarreur passant dans un fonctionnement en mode pulsé, fonctionnement au cours duquel le dispositif de commande d'intensité de courant (12) est fermé ou ouvert de manière pulsée.

2. Système de limitation du courant de démarrage selon la revendication 1, **caractérisé en ce que** le dispositif de commande d'intensité de courant (12) est ouvert au début du démarrage à chaud et/ou **en ce que** le dispositif de commande d'intensité de courant (12), au début d'un démarrage à froid, est fermé au moins une partie du temps.

3. Système de limitation du courant de démarrage selon la revendication 1 ou 2, **caractérisé en ce que** le dispositif de commande d'intensité de courant (12), après le début du démarrage à chaud, en particulier après un laps de temps écoulé au moins de 10 ms, de préférence de 30 ms, de façon particulièrement préférable de 40 ms, est fermé au moins une partie du temps.

4. Système de limitation du courant de démarrage selon l'une quelconque des revendications précédentes, **caractérisé en ce que** la branche comportant la résistance (14) présente exclusivement des composants passifs et/ou **en ce que** la branche comportant la résistance (14) est couplée en parallèle au dispositif de commande d'intensité de courant (12), avec une inductance de moins de 500 mH, de préférence de moins de 100 mH, de façon particulièrement préférable de moins de 50 mH.

5. Système de limitation du courant de démarrage selon l'une quelconque des revendications précédentes, **caractérisé en ce que** la résistance (14) présente une intensité maximale admissible de plus de 100 A, de préférence de plus de 250 A, de façon particulièrement préférable de plus de 500 A.

6. Système de limitation du courant de démarrage selon l'une quelconque des revendications précédentes, **caractérisé en ce que**, connecté en série par rapport au montage en parallèle, un élément de coupure pyrotechnique (2b) est disposé entre les connexions (4, 6) ou bien entre la première connexion (4) et la borne polaire de la batterie du véhicule automobile.

7. Système de limitation du courant de démarrage selon la revendication 6, **caractérisé en ce que** l'élément de coupure pyrotechnique (2b) coupe la liaison électrique établie avec la borne polaire de la batterie du véhicule automobile en fonction d'un signal de déclenchement, où, en particulier, le signal de déclenchement peut être reçu par un appareil de commande des coussins de sécurité gonflables, ou bien où le signal de déclenchement est fonction d'un dispositif de mesure de la tension, ledit dispositif mesurant la tension aux bornes de la résistance (14), où, en particulier, le signal de déclenchement est fonction d'un signal de démarrage, de préférence d'un signal de borne 50.

8. Système de limitation du courant de démarrage selon l'une quelconque des revendications précédentes, **caractérisé en ce que** les connexions (4, 6), la résistance (14) et le dispositif de commande d'intensité de courant (12), ainsi que l'élément de coupure quand le système de limitation du courant de démarrage dépend de la revendication 6 ou 7, sont encapsulés au moins en partie dans un boîtier commun.

9. Système de limitation du courant de démarrage selon la revendication 6 ou 7, **caractérisé en ce que** la connexion (4, 6) au moins au nombre de un forme un pot (38), de manière telle que le pot (38) corresponde au logement (36) de l'élément de coupure pyrotechnique (2b).

10. Système de limitation du courant de démarrage selon la revendication 6, 7 ou 9, **caractérisé en ce que** le logement (36) de l'élément de coupure pyrotechnique (2b) est formé en constituant une seule et même pièce avec une borne polaire (9) de la batterie.

11. Système de limitation du courant de démarrage selon l'une quelconque des revendications précédentes, **caractérisé en ce que** les deux connexions (4, 6) débouchent dans des tôles électriquement isolées l'une de l'autre par un interstice et disposées en étant parallèles l'une à l'autre, où la résistance (14) et/ou le dispositif de commande d'intensité de courant (12) met les tôles électriquement en contact l'une avec l'autre, via l'interstice.

12. Procédé permettant de faire fonctionner un système de limitation du courant de démarrage selon l'une quelconque des revendications précédentes, ledit procédé comprenant :

   - une ouverture d'une liaison créée entre la première connexion électrique (4) pouvant être raccordée à une borne polaire de la batterie d'un véhicule automobile, et la seconde connexion électrique (6) pouvant être raccordée à un démarreur, ladite liaison étant rendue possible par le dispositif de commande d'intensité de courant (12) au début d'un processus de démarrage à chaud,
   - une liaison des connexions (4, 6) rendue possible par la résistance (14) au début du processus de démarrage à chaud, et

- une liaison supplémentaire des connexions (4, 6), ladite liaison se produisant au moins une partie du temps après le début du démarrage à chaud par le dispositif de commande d'intensité de courant (12), où le courant du démarreur est réglé par le dispositif de commande d'intensité de courant (12) qui est formé par au moins un contacteur à semi-conducteurs, et, après le début du démarrage à chaud, ledit courant du démarreur est réglé en passant dans un fonctionnement en mode linéaire, fonctionnement au cours duquel le courant du démarreur est réglé de façon linéaire par le contacteur à semi-conducteurs, ou bien est réglé en passant dans un fonctionnement en mode pulsé, fonctionnement au cours duquel le dispositif de commande d'intensité de courant (12) est fermé et ouvert de manière pulsée.

13. Procédé selon la revendication 12, **caractérisé par** une surveillance d'une chute de tension aux bornes de la résistance (14), ladite chute de tension étant considérée comme au moins une première condition de déclenchement, et caractérisé de préférence par une surveillance supplémentaire d'un signal de démarrage considéré comme une autre condition de déclenchement.

14. Utilisation d'un système de limitation du courant de démarrage selon la revendication 1, dans un câble de liaison batterie / démarreur d'un véhicule automobile.

Fig.1

Fig.2

Fig.3

Fig.4

Fig.5

Fig.6

Fig.7a

Fig.7b

Fig.8a

Fig.8b

Fig.8c

Fig.9a

Fig.9b

Fig.10

Fig.11

Fig.12

**IN DER BESCHREIBUNG AUFGEFÜHRTE DOKUMENTE**

**In der Beschreibung aufgeführte Patentdokumente**

- DE 102007062955 A1
- DE 102009047635